(19) Europäisches Patentamt
European Patent Office
Office européen des brevets

(11) **EP 2 790 367 A1**

(12) **EUROPEAN PATENT APPLICATION**
published in accordance with Art. 153(4) EPC

(43) Date of publication:
**15.10.2014 Bulletin 2014/42**

(51) Int Cl.:
***H04L 27/26*** (2006.01)

(21) Application number: **12853938.4**

(22) Date of filing: **24.08.2012**

(86) International application number:
**PCT/KR2012/006772**

(87) International publication number:
**WO 2013/081274 (06.06.2013 Gazette 2013/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2011 US 201161566004 P**

(71) Applicant: **LG Electronics Inc.**
**Yeongdeungpo-gu**
**Seoul 150-721 (KR)**

(72) Inventors:
• **KIM, Kitae**
**Anyang-si**
**Gyeonggi-do 431-080 (KR)**
• **CHUN, Jinyoung**
**Anyang-si**
**Gyeonggi-do 431-080 (KR)**

• **KIM, Sunam**
**Anyang-si**
**Gyeonggi-do 431-080 (KR)**
• **KANG, Jiwon**
**Anyang-si**
**Gyeonggi-do 431-080 (KR)**
• **IHM, Binchul**
**Anyang-si**
**Gyeonggi-do 431-080 (KR)**
• **PARK, Sungho**
**Anyang-si**
**Gyeonggi-do 431-080 (KR)**

(74) Representative: **Urner, Peter**
**Ter Meer Steinmeister & Partner**
**Mauerkircherstrasse 45**
**81679 München (DE)**

(54) **METHOD FOR RECEIVING DOWNLINK CONTROL CHANNEL BY MEANS OF A TERMINAL IN A WIRELESS CHANNEL SYSTEM AND APPARATUS FOR SAME**

(57)    The present invention relates to a method for receiving a downlink control channel by means of a terminal in a wireless channel system and an apparatus for same. In particular, the method for receiving a downlink control channel by means of a terminal in a wireless channel system includes the steps of: dividing at least one resource block allocated to the terminal into the preset number of subsets; selecting one or more subsets for the terminal from the at least one resource block; setting the selected subset set as a search space for the terminal; and performing blind decoding for the search space to detect the downlink control channel, wherein the preset number of subsets are respectively demodulated by demodulation reference signals (DM-RS) defined with different antenna ports in each of the resource blocks.

FIG. 10

**Description**

[Technical Field]

The present invention relates to a wireless communication system and, more particularly, to a method for receiving a downlink control channel at a user equipment in a wireless communication system and an apparatus therefor.

[Background Art]

As an example of a wireless communication system to which the present invention is applicable, a 3rd generation partnership project long term evolution (hereinafter, referred to as LTE) communication system will be briefly described hereinafter.

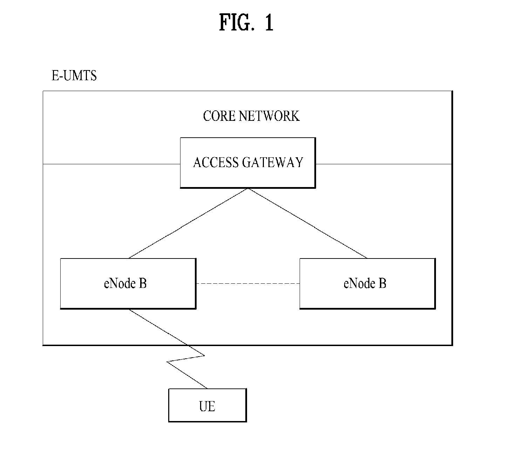

FIG. 1 is a view schematically illustrating a network structure of an E-UMTS as an exemplary wireless communication system. An evolved universal mobile telecommunications system (E-UMTS) is an advanced version of a conventional universal mobile telecommunications system (UMTS) and basic standardization thereof is currently underway in 3GPP. E-UMTS may be generally referred to as a long term evolution (LTE) system. For details of the technical specifications of UMTS and E-UMTS, reference can be made to Release 7 and Release 8 of "3rd Generation Partnership Project; Technical Specification Group Radio Access Network", respectively.

Referring to FIG. 1, E-UMTS includes a user equipment (UE), eNode Bs (eNBs), and an access gateway (AG) which is located at an end of a network (Evolved Universal Terrestrial Radio Access Network (E-UTRAN)) and connected to an external network. The eNBs may simultaneously transmit multiple data streams for a broadcast service, a multicast service, and/or a unicast service.

One eNB includes one or more cells. A cell is configured to use one of bandwidths of 1.44, 3, 5, 10, and 20 MHz to provide a downlink or uplink transport service to several UEs. Different cells may be configured to provide different bandwidths. The eNB controls data transmission and reception for multiple UEs. The eNB transmits downlink scheduling information with respect to downlink data to notify a corresponding UE of a time/frequency domain in which data is to be transmitted, coding, data size, and hybrid automatic repeat and request (HARQ)-related information. In addition, the eNB transmits uplink scheduling information with respect to uplink data to a corresponding UE to inform the UE of an available time/frequency domain, coding, data size, and HARQ-related information. An interface may be used to transmit user traffic or control traffic between eNBs. A core network (CN) may include the AG, a network node for user registration of the UE, and the like. The AG manages mobility of a UE on a tracking area (TA) basis, each TA including a plurality of cells.

Although radio communication technology has been developed up to 3GPP LTE based on wideband code division multiple access (WCDMA), demands and expectations of users and providers continue to increase. In addition, since other radio access technologies continue to be developed, new advances in technology are required to secure future competitiveness. Decrease of cost per bit, increase of service availability, flexible use of a frequency band, simple structure, open interface, and suitable power consumption by a UE are required.

[Disclosure]

[Technical Problem]

An object of the present invention is to provide a method for receiving a downlink control channel at a UE in a wireless communication system and an apparatus therefor.

Technical objects to be achieved through the present invention are not limited to what has been particularly described hereinabove and other technical objects of the present invention not mentioned herein will be more clearly understood by persons skilled in the art from the following detailed description.

[Technical Solution]

In an aspect of the present invention, a method for receiving a downlink control channel at a user equipment in a wireless communication system includes dividing each of at least one resource block allocated to the user equipment into a preset number of subsets; selecting one or more subsets for the user equipment in each of the at least one resource block; configuring a set of the selected subsets as a search space for the user equipment; and detecting the downlink control channel by performing blind decoding upon the search space, wherein each of the preset number of subsets is demodulated by a demodulation reference signal defined by different antenna ports in each resource block.

The set of the selected subsets may include subsets demodulated by a demodulation reference signal defined by the same antenna port or subsets demodulated by a demodulation reference signal defined by a plurality of different antenna ports for the user equipment.

An aggregation level of the downlink control channel may be 1 or 2.

[Advantageous Effects]

According to the present invention, in a wireless communication system, a base station (BS) can efficiently allocate a downlink control channel for a plurality of UEs and the UEs can efficiently receive the downlink control channel. **[0013]** Effects that can be achieved through the present invention are not limited to what has been particularly described hereinabove and other advantages of the present invention not mentioned herein will be more clearly understood by persons skilled in the art from the following detailed description.

[Description of Drawings]

The accompanying drawings, which are included to provide a further understanding of the invention, illustrate embodiments of the invention and together with the description serve to explain the principle of the invention. In the drawings:

FIG. 1 illustrates physical channels used in an exemplary 3GPP LTE system of a wireless communication system and a general signal transmission method using the same
FIG. 2 is a view illustrating structures of a control plane and a user plane of a radio interface protocol between a UE and an E-UTRAN based on 3GPP radio access network specifications;
FIG. 3 is a view illustrating physical channels used in a 3GPP system and a general signal transmission method using the same;
FIG. 4 is a view illustrating the configuration of a MIMO communication system;
FIG. 5 is a view illustrating the structure of a downlink radio frame used in an LTE system;
FIG. 6 illustrates a resource unit used to configure a DL control channel in an LTE system;
FIG. 7 is a view illustrating a multi-node system in a next-generation communication system;
FIG. 8 is a view illustrating an E-PDCCH and a PDSCH scheduled by the E-PDCCH;
FIG. 9 is a view explaining the concept of an aggregation level of an E-PDCCH according to an embodiment of the present invention;
FIGs. 10 and 11 are views explaining configuration of a search space with a subset corresponding to a UE-specific reference signal in at least one PRB according to an embodiment of the present invention;
FIG. 12 is a view referred to for explaining a search space configured by a UE based on an aggregation level according to an embodiment of the present invention; and
FIG. 13 illustrates a BS and a UE that are applicable to an embodiment of the present invention.

[Best Mode]

The following technology can be applied to a variety of wireless access systems using code division multiple access (CDMA), frequency division multiple access (FDMA), time division multiple access (TDMA), orthogonal frequency division multiple access (OFDMA), single carrier frequency division multiple access (SC-FDMA), and the like. CDMA may be embodied as radio technology such as universal terrestrial radio access (UTRA) or CDMA2000. TDMA may be embodied as radio technology such as global system for mobile communications (GSM)/general packet radio service (GPRS)/enhanced data rates for GSM evolution (EDGE). OFDMA may be embodied with radio technology such as IEEE 802.11 (Wi-Fi), IEEE 802.16 (WiMAX), IEEE 802-20, and evolved UTRA (E-UTRA). UTRA is a part of a universal mobile telecommunications system (UMTS). 3rd generation partnership project (3GPP) long-term evolution (LTE) is part of an evolved UMTS (E-UMTS), which uses E-UTRA. 3GPP LTE employs OFDMA in downlink and employs SC-FDMA in uplink. LTE-advanced (LTE-A) is an evolved version of 3GPP LTE.
For clarity, the following description focuses on 3GPP LTE/LTE-A. However, technical features of the present invention are not limited thereto. In addition, specific terms used in the following description are provided to aid in understanding the present invention and modifications thereof can be made in other forms without departing from the technical spirit of the present invention.
In a wireless communication system, a UE receives information from an eNB in downlink (DL) and transmits the information to the eNB in uplink (UL). The information transmitted and received between the eNB and the UE includes data and various pieces of control information and includes a variety of physical channels according to types/purposes thereof.

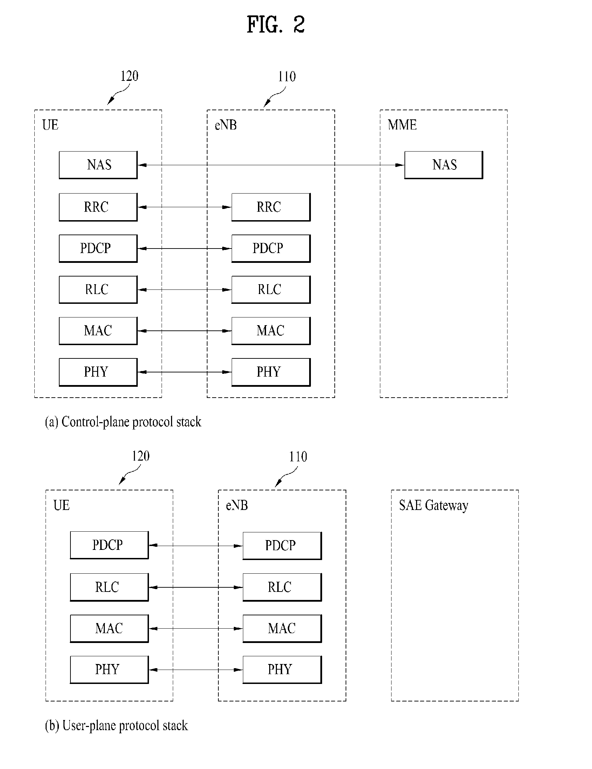

FIG. 2 is a view illustrating structures of a control plane and a user plane of a radio interface protocol between a UE and an E-UTRAN based on 3GPP radio access network specifications. The control plane refers to a path used for transmission of control messages, which are used by a UE and a network to manage a call. The user plane refers to a path used for transmitting data generated in an application layer, e.g. voice data or Internet packet data.

A physical layer of a first layer provides an information transfer service to a higher layer using a physical channel. The physical layer is connected to a medium access control (MAC) layer of a higher layer via a transport channel. Data is transported between the MAC layer and the physical layer via the transport channel. Data is also transported between a physical layer of a transmitting side and a physical layer of a receiving side via a physical channel. The physical channel uses time and frequency as radio resources. Specifically, the physical channel is modulated using an orthogonal frequency division multiple access (OFDMA) scheme in DL and is modulated using a single-carrier frequency division multiple access (SC-FDMA) scheme in UL.

A medium access control (MAC) layer of a second layer provides a service to a radio link control (RLC) layer of a higher layer via a logical channel. The RLC layer of the second layer supports reliable data transmission. The function of the RLC layer may be implemented by a functional block within the MAC layer. A packet data convergence protocol (PDCP) layer of the second layer performs a header compression function to reduce unnecessary control information for efficient transmission of an Internet protocol (IP) packet such as an IPv4 or IPv6 packet in a radio interface having a relatively narrow bandwidth.

A radio resource control (RRC) layer located at the bottommost portion of a third layer is defined only in the control plane. The RRC layer controls logical channels, transport channels, and physical channels in relation to configuration, re-configuration, and release of radio bearers. A radio bearer refers to a service provided by the second layer to transmit data between the UE and the network. To this end, the RRC layer of the UE and the RRC layer of the network exchange RRC messages. The UE is in RRC connected mode if an RRC connection has been established between the RRC layer of the radio network and the RRC layer of the UE. Otherwise, the UE is in RRC idle mode. A non-access stratum (NAS) layer located at a higher level of the RRC layer performs functions such as session management and mobility management.

One cell of the eNB is set to use one of bandwidths such as 1.4, 3, 5, 10, 15, and 20MHz to provide a DL or UL transmission service to multiple UEs. Different cells may be set to provide different bandwidths.

DL transport channels for data transmission from the network to the UE include a broadcast channel (BCH) for transmitting system information, a paging channel (PCH) for transmitting paging messages, and a DL shared channel (SCH) for transmitting user traffic or control messages. Traffic or control messages of a DL multicast or broadcast service may be transmitted through the DL SCH or may be transmitted through an additional DL multicast channel (MCH). Meanwhile, UL transport channels for data transmission from the UE to the network include a random access channel (RACH) for transmitting initial control messages and a UL SCH for transmitting user traffic or control messages. Logical channels, which are located at a higher level of the transport channels and are mapped to the transport channels, include a broadcast control channel (BCCH), a paging control channel (PCCH), a common control channel (CCCH), a multicast control channel (MCCH), and a multicast traffic channel (MTCH).

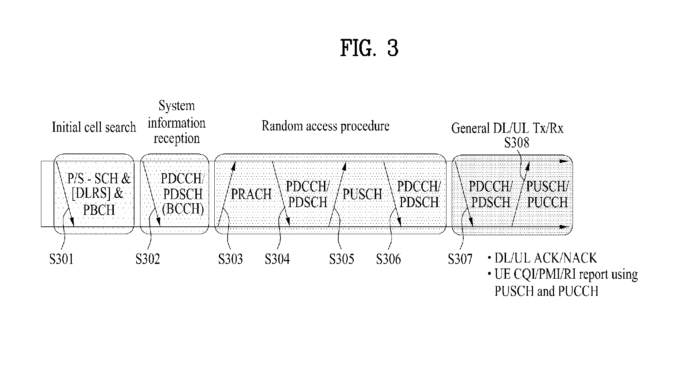

FIG. 3 is a view illustrating physical channels used in a 3GPP LTE system and a general signal transmission method using the same.

A UE performs initial cell search such as establishment of synchronization with an eNB when the UE is powered on or the UE enters a new cell in step S301. The UE may receive a primary synchronization channel (P-SCH) and a secondary synchronization channel (S-SCH) from the eNB, establish synchronization with the eNB, and acquire information such as a cell identity (ID). Thereafter, the UE may receive a physical broadcast channel from the eNB to acquire broadcast information within the cell. Meanwhile, the UE may receive a DL reference signal (RS) in the initial cell search step to confirm a downlink channel state.

Upon completion of initial cell search, the UE may receive a physical downlink control channel (PDCCH) and a physical downlink shared channel (PDSCH) according to information included in the PDCCH to acquire more detailed system information in step S302.

Next, the UE may perform a random access procedure such as steps S303 to S306 to complete access to the eNB. To this end, the UE may transmit a preamble through a physical random access channel (PRACH) (S303) and receive a response message to the preamble through the PDCCH and the PDSCH corresponding to the PDCCH (S304). In the case of contention-based random access, a contention resolution procedure such as transmission of the PRACH (S305) and reception of the PDCCH and the PDSCH corresponding to the PDCCH (S306) may be additionally performed.

The UE which has performed the above procedures may receive the PDCCH/PDSCH (step S307) and transmit a physical uplink shared channel (PUSCH)/physical uplink control channel (PUCCH) (step S308) according to a general UL/DL signal transmission procedure. Control information transmitted by the UE to the eNB is referred to as uplink control information (UCI). The UCI includes hybrid automatic repeat and request (HARQ) acknowledgement (ACK)/negative ACK (NACK), scheduling request (SR), and channel state information (CSI). In the present specification, HARQ ACK-NACK is simply referred to as HARQ-ACK or ACK/NACK (A/N). HARQ-ACK includes at least one of positive ACK (simply, ACK), negative ACK (NACK), discontinuous transmission (DTX), and NACK/DTX. CSI includes a channel quality indicator (CQI), a precoding matrix indicator (PMI), and a rank indication (RI). Although the UCI is generally transmitted through a PUCCH, it may be transmitted through a PUSCH if control information and traffic data should be simultaneously transmitted. The UCI may be aperiodically transmitted through the PUSCH at the request/command of the network.

Hereinafter, a MIMO system will be described. Multiple-input multiple-output (MIMO) refers to a method of using multiple transmit antennas and multiple receive antennas to improve data transmission/reception efficiency. Namely, a plurality of antennas is used at a transmitting end or a receiving end of a wireless communication system so that capacity can be increased and performance can be improved. MIMO may also be referred to as 'multi-antenna' in this disclosure.

MIMO technology does not depend on a single antenna path in order to receive a whole message. Instead, MIMO technology collects data fragments received via several antennas, merges the data fragments, and forms complete data. The use of MIMO technology can increase system coverage while improving data transfer rate within a cell area of a specific size or guaranteeing a specific data transfer rate. MIMO technology can be widely used in mobile communication terminals and relay nodes. MIMO technology can overcome the limitations of the restricted amount of transmission data of conventional single antenna based mobile communication.

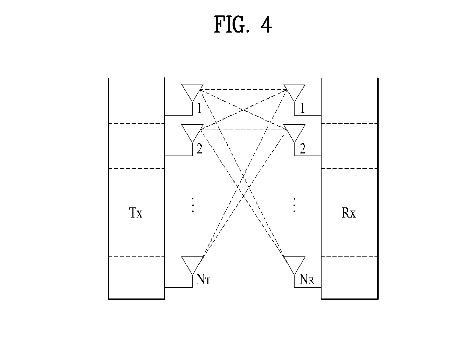

The configuration of a MIMO communication system described in the present invention is shown in FIG. 4. A transmitting end is equipped with $N_T$ transmit antennas and a receiving end is equipped with $N_R$ receive antennas. If a plurality of antennas is used both at the transmitting end and at the receiving end, theoretical channel transmission capacity increases unlike the case in which only either the transmitting end or the receiving end uses a plurality of antennas. Increase in channel transmission capacity is proportional to the number of antennas, thereby improving transfer rate and frequency efficiency. If a maximum transfer rate using a signal antenna is $R_o$, a transfer rate using multiple antennas can be theoretically increased by the product of the maximum transfer rate $R_o$ by a rate increment $R_i$. The rate increment $R_i$ is represented by the following equation 1 where Ri is the smaller of $N_T$ and $N_R$.

[Equation 1]

$$R_i = \min(N_T, N_R)$$

For example, in a MIMO communication system using four transmit antennas and four receive antennas, it is possible to theoretically acquire a transfer rate four times that of a single antenna system. After theoretical increase in capacity provided by the MIMO system was first demonstrated in the mid-1990s, various techniques for substantially improving data transfer rate have been under development. Several of these techniques have already been incorporated into a variety of wireless communication standards including third generation mobile communication and next-generation wireless local area networks.

Active research up to now related to MIMO technology has focused upon a number of different aspects, including research into information theory related to MIMO communication capacity calculation in various channel environments and in multiple access environments, research into wireless channel measurement and model derivation of MIMO systems, and research into spatial-temporal signal processing technologies for improving transmission reliability and transfer rate.

A mathematical model of a communication method in a MIMO system will be explained in detail hereinafter. As shown in FIG. 4, it is assumed that $N_T$ transmit antennas and $N_R$ receive antennas are present. In the case of a transmission signal, a maximum number of transmittable pieces of information is $N_T$ under the condition that $N_T$ transmit antennas are used, so that transmission information can be represented by a vector represented by the following equation 2.

[Equation 2]

$$\mathbf{s} = \left[ s_1, s_2, \cdots, s_{N_T} \right]^T$$

Meanwhile, individual transmission information pieces $s_1$, $s_2$,..., $s_{N_T}$ may have different transmission powers. In this case, if the individual transmission powers are denoted by $P_1$, $P_2$,..., $P_{N_T}$, transmission information having adjusted transmission powers can be represented by a vector shown in the following equation 3.

[Equation 3]

$$\hat{\mathbf{s}} = \left[ \hat{s}_1, \hat{s}_2, \cdots, \hat{s}_{N_T} \right]^T = \left[ P_1 s_1, P_2 s_2, \cdots, P_{N_T} s_{N_T} \right]^T$$

$\hat{\mathbf{s}}$ may be expressed as follows, using a diagonal matrix $P$ of a transmission power.

[Equation 4]

$$\hat{\mathbf{s}} = \begin{bmatrix} P_1 & & & 0 \\ & P_2 & & \\ & & \ddots & \\ 0 & & & P_{N_T} \end{bmatrix} \begin{bmatrix} s_1 \\ s_2 \\ \vdots \\ s_{N_T} \end{bmatrix} = \mathbf{Ps}$$

Meanwhile, $N_T$ transmitted signals $x_1, x_2, ..., x_{N_T}$ to be actually transmitted may be considered by applying a weight matrix W to the transmission power-controlled information vector $\hat{\mathbf{s}}$. In this case, the weight matrix is adapted to properly distribute transmission information to individual antennas according to transmission channel situations. The transmission signals $x_1, x_2, \cdots, x_{N_T}$ can be represented by the following Equation 5 using a vector $X$. In Equation 5, $W_{ij}$ is a weight between the i-th transmit antenna and the j-th information and W is referred to as a weight matrix or a precoding matrix.

[Equation 5]

$$\mathbf{x} = \begin{bmatrix} x_1 \\ x_2 \\ \vdots \\ x_i \\ \vdots \\ x_{N_T} \end{bmatrix} = \begin{bmatrix} w_{11} & w_{12} & \cdots & w_{1N_T} \\ w_{21} & w_{22} & \cdots & w_{2N_T} \\ \vdots & & \ddots & \\ w_{i1} & w_{i2} & \cdots & w_{iN_T} \\ \vdots & & & \ddots \\ w_{N_T1} & w_{N_T2} & \cdots & w_{N_TN_T} \end{bmatrix} \begin{bmatrix} \hat{s}_1 \\ \hat{s}_2 \\ \vdots \\ \hat{s}_j \\ \vdots \\ \hat{s}_{N_T} \end{bmatrix} = \mathbf{W\hat{s}} = \mathbf{WPs}$$

Generally, the physical meaning of a rank of a channel matrix may be a maximum number of different pieces of information that can be transmitted in a given channel. Accordingly, since the rank of the channel matrix is defined as the smaller of the number of rows or columns, which are independent of each other, the rank of the matrix is not greater than the number of rows or columns. Mathematically for example, a rank of a channel matrix H, rank(H), is restricted as follows.

[Equation 6]

$$rank(\mathbf{H}) \leq \min\left(N_T, N_R\right)$$

Assuming that each unit of different information transmitted using MIMO technology is defined as a 'transmission stream' or simply 'stream', the 'stream' may be referred to as a 'layer'. Of course, the number of transmission streams is not greater than a rank of a channel, which is a maximum number of different pieces of transmittable information. Accordingly, the channel matrix H may be indicted by the following Equation 7.

[Equation 7]

$$\# \, of \, streams \leq rank(\mathbf{H}) \leq \min\left(N_T, N_R\right)$$

Here, '# of streams' denotes the number of streams. Note that one stream may be transmitted through one or more antennas.

There may be various methods of allowing one or more streams to correspond to multiple antennas. These methods may be described as follows according to types of MIMO technology. The case in which one stream is transmitted via multiple antennas may be called a spatial diversity scheme and the case in which multiple streams are transmitted via multiple antennas may be called a spatial multiplexing scheme. It is also possible to configure a hybrid of spatial diversity and spatial multiplexing.

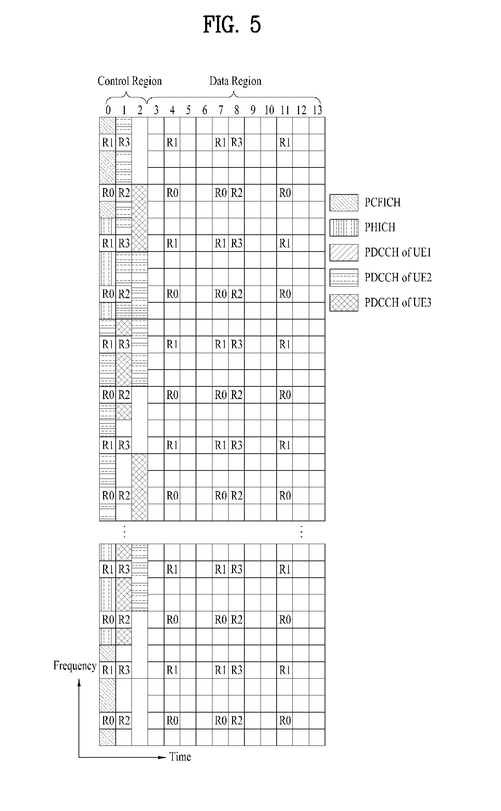

FIG. 5 is a view illustrating control channels contained in a control region of one subframe in a DL radio frame

Referring to FIG. 5, a subframe includes 14 OFDM symbols. The first one to three OFDM symbols are used for a control region and the other 13 to 11 OFDM symbols are used for a data region according to subframe configuration. In FIG. 5, R1 to R4 denote RSs or pilot signals for antenna 0 to antenna 3. RSs are fixed in a predetermined pattern in a subframe irrespective of the control region and the data region. Control channels are allocated to non-RS resources in the control region and traffic channels are also allocated to non-RS resources in the data region. The control channels allocated to the control region include a physical control format indicator channel (PCFICH), a physical hybrid-ARQ indicator channel (PHICH), a physical downlink control channel (PDCCH), etc.

The PCFICH, a physical control format indicator channel, carries the number of OFDM symbols used for PDCCHs in each subframe to the UE. The PCFICH is located in the first OFDM symbol of a subframe and configured with priority over the PHICH and the PDCCH. The PCFICH is composed of 4 resource element groups (REGs), each REG being distributed based on a cell ID in the control region. One REG includes 4 resource elements (REs). An RE is a minimum physical resource defined by one subcarrier by one OFDM symbol. The PCFICH indicates a value of 1 to 3 or 2 to 4 according to bandwidth. The PCFICH is modulated using quadrature phase shift keying (QPSK).

The PHICH is a physical Hybrid-Automatic Repeat and request (HARQ) indicator channel carrying an HARQ ACK/NACK for UL transmission. That is, the PHICH is a channel that delivers DL ACK/NACK information for UL HARQ. The PHICH includes one REG and is scrambled cell-specifically. ACK/NACK is indicated in one bit and modulated using binary phase shift keying (BPSK). The modulated ACK/NACK is spread with a spreading factor (SF) of 2 or 4. A plurality of PHICHs mapped to the same resources form a PHICH group. The number of PHICHs multiplexed into a PHICH group is determined according to the number of spreading codes. A PHICH (group) is repeated three times to obtain a diversity gain in the frequency domain and/or the time domain.

The PDCCH is a physical downlink control channel allocated to the first n OFDM symbols of a subframe. Herein, n is an integer of 1 or greater indicated by the PCFICH. The PDCCH is composed of one or more control channel elements (CCEs). The PDCCH carries resource allocation information about transport channels, a PCH and a DL-SCH, a UL scheduling grant, and HARQ information to each UE or UE group. The PCH and the DL-SCH are transmitted on a PDSCH. Therefore, an eNB and a UE transmit and receive data usually on the PDSCH, except for specific control information or specific service data.

Information indicating to which UE (one or more UEs) PDSCH data is transmitted and information indicating how the UEs are supposed to receive and decode the PDSCH data are carried on a PDCCH. For example, on the assumption that the CRC of a specific PDCCH is masked by a radio network temporary identity (RNTI) "A" and information about data transmitted in radio resources (e.g. at a frequency position) "B" based on transport format information (e.g. a transport block size, a modulation scheme, coding information, etc.) "C" is transmitted in a specific subframe, a UE within a cell monitors a PDCCH using RNTI information thereof. If one or more UEs have RNTI "A", these UEs receive the PDCCH and receives a PDSCH indicated by "B" and "C" based on information of the received PDCCH.

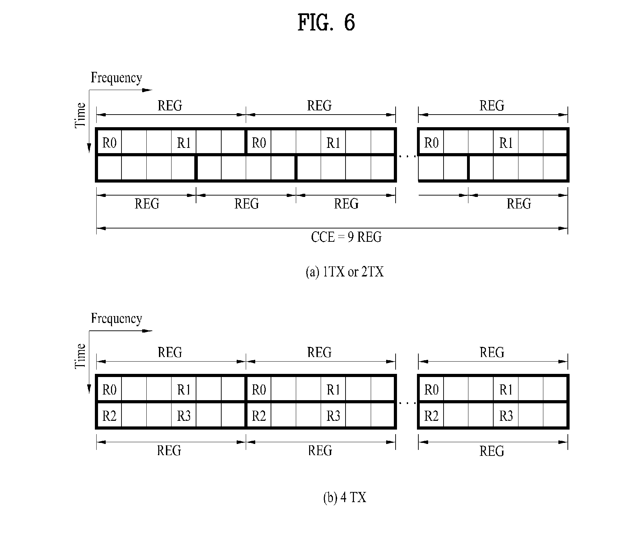

FIG. 6 illustrates a resource unit used to configure a DL control channel in an LTE system. Specifically, FIG. 6(a) illustrates a case of 1 or 2 transmit antennas in an eNB and FIG. 6(b) illustrates a case of 4 transmit antennas in an eNB. Resource units are configured for control channels in the same manner, except that an RS pattern differs according to the number of transmit antennas.

Referring to FIG. 6, a basic resource unit for a DL control channel is an REG. An REG includes 4 adjacent REs, except RSs. REGs are marked by bold lines in FIG. 6. The PCFICH and the PHICH include 4 REGs and 3 REGs, respectively. A PDCCH is configured in units of a CCE and one CCE includes 9 REGs.

To determine whether a PDCCH having L CCEs is transmitted to a UE, the UE is configured to monitor $M^{(L)}(\geq L)$ contiguous CCEs or $M^{(L)}(\geq L)$ CCEs arranged according to a predetermined rule. The UE may consider a plurality of L values, for PDCCH reception. CCE sets that the UE should monitor for PDCCH reception are called a search space. For instance, the LTE system defines search spaces as illustrated in Table 1.

[Table 1]

| Search space $S_k^{(L)}$ | | | Number of PDCCH candidates $M^{(L)}$ | DCI formats |
|---|---|---|---|---|
| Type | Aggregation level $L$ | Size [in CCEs] | | |
| UE-specific | 1 | 6 | 6 | 0, 1, 1A, 2B, 1D, 2, 2A, 2B, 4 |
| | 2 | 12 | 6 | |
| | 4 | 8 | 2 | |
| | 8 | 16 | 2 | |
| Common | 4 | 16 | 4 | 0, 1A, 1C, 3/3A |
| | 8 | 16 | 2 | |

A CCE aggregation level L indicates the number of CCEs that form a PDCCH, $S_k^{(L)}$ indicates a search space with the CCE aggregation level L, and $M^{(L)}$ indicates the number of PDCCH candidates to be monitored in the search space with aggregation level L.

Search spaces may be categorized into a UE-specific search space accessible only by a specific UE and a common search space accessible by all UEs within a cell. A UE monitors common search spaces with CCE aggregation levels 4 and 8 and UE-specific search spaces with CCE aggregation levels 1, 2, 4 and 8. The common search space may overlap with the UE-specific search space.

For each CCE aggregation level, the position of the first CCE (a CCE having the smallest index) in a PDCCH search space allocated to a UE changes for the UE in every subframe. This is called PDCCH search space hashing.

The CCE may be distributed across a system band. More specifically, logically successive CCEs are input to an interleaver. The interleaver interleaves the input CCEs on an REG basis. Therefore, the frequency/time resources of one CCE are physically distributed across a total frequency/time area within the control region of a subframe. As a consequence, even though a control channel is configured with CCEs, interleaving is performed on an REG basis, thereby maximizing diversity and interference randomization gain.

With the emergence and widespread use of various devices requiring machine-to-machine (M2M) communication and high transmission rate, data requirements for a cellular network in current radio communication environments have rapidly increased. To meet required high data transmission rate, communication technology has developed into carrier aggregation technology for efficiently using more frequency bands, MIMO technology for raising data capacity in a limited frequency, and multi-eNB cooperative technology. In addition, communication environments have evolved to increasing density of accessible nodes in the vicinity of a user. A system equipped with nodes with high density may exhibit higher system performance by cooperation between nodes. Such a scheme provides much better performance than a non-cooperative scheme by allowing each node to operate as an independent base station (BS), advanced BS (ABS), node-B (NB), eNode-B (eNB), or access point (AP).

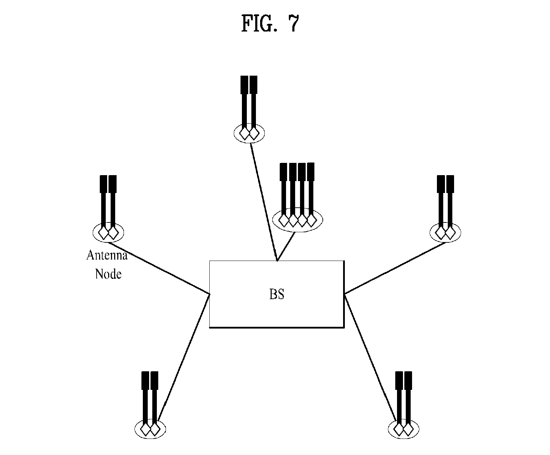

FIG. 7 is a view illustrating a multi-node system in a next-generation communication system.

Referring to FIG. 7, if transmission and reception of all nodes is managed by one controller so that an individual node operates as a set of some antennas of one cell, this system may be regarded as a distributed multi-node system (DMNS) forming one cell. In this case, an individual node may be assigned an additional node ID or may operate as partial antennas in a cell without the additional node ID. However, if the nodes have different cell IDs, this system may be regarded as a multi-cell system. If multiple cells are overlaid according to their coverage, this is referred to as a multi-tier network.

Meanwhile, a node may includes a Node-B, an eNode-B, a pico eNB (PeNB), a home eNB (HeNB), a remote radio head (RRH), a relay, a distributed antenna, etc. A minimum of one antenna is installed per node. The node may also be called a transmission point. Although the node generally refers to an antenna group having antennas separated by a predetermined interval, the present invention is applicable even when the node is defined as an arbitrary antenna group irrespective of the interval.

Due to introduction of the above-described multi-node system and relay node, various communication schemes can be applied and thus channel quality can be improved. However, introduction of a new control channel has been demanded to apply the aforementioned MIMO scheme and inter-cell cooperation communication scheme to a multi-node environment. For these requirements, a newly discussed control channel to be introduced is an enhanced PDCCH (E-PDCCH). The E-PDCCH has been designed for allocation to a data region (hereinafter, a PDSCH region) rather than a control region (hereinafter, a PDCCH region) of a conventional allocation region. Consequently, control information for nodes can be transmitted to each UE through the E-PDCCH so that a problem of the existing insufficient PDCCH region can be solved. For reference, the E-PDCCH is not provided to a legacy UE and only an LTE-A UE can receive the E-PDCCH.

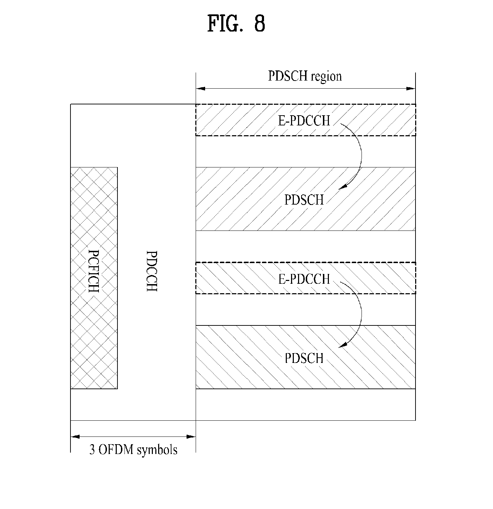

FIG. 8 is a view illustrating an E-PDCCH and a PDSCH scheduled by the E-PDCCH.

Referring to FIG. 8, the E-PDCCH may be used by defining a portion of a PDSCH region in which data is generally transmitted. A UE should perform a blind decoding process to determine whether an E-PDCCH thereof is detected. The E-PDCCH performs the same scheduling operation (i.e. PDSCH or PUSCH control) as an existing PDCCH. However, if the number of UEs connected to a node such as an RRH increases, more E-PDCCHs are allocated in the PDSCH region so that the number of blind decoding processes that should be performed by the UE may increase and thus complexity may increase.

The present invention proposes a multiplexing scheme capable of obtaining a higher diversity gain during transmission of the E-PDCCH. The E-PDCCH is transmitted using OFDM symbols (of a data region) after a PDCCH. Accordingly, to decode a data channel after early decoding of a control channel, the E-PDCCH may be designed to be transmitted using only the front partial symbols of the data region. However, it is apparent that the E-PDCCH may be transmitted using all symbols or the rear partial symbols when there is no problem of time of data channel decoding. Meanwhile, similar to a PDSCH, the E-PDCCH is desirably transmitted in the form of an aggregate of partial physical resource blocks (PRBs) to occupy only selective resources in the frequency domain because multiplexing with the PDSCH can be performed without problem.

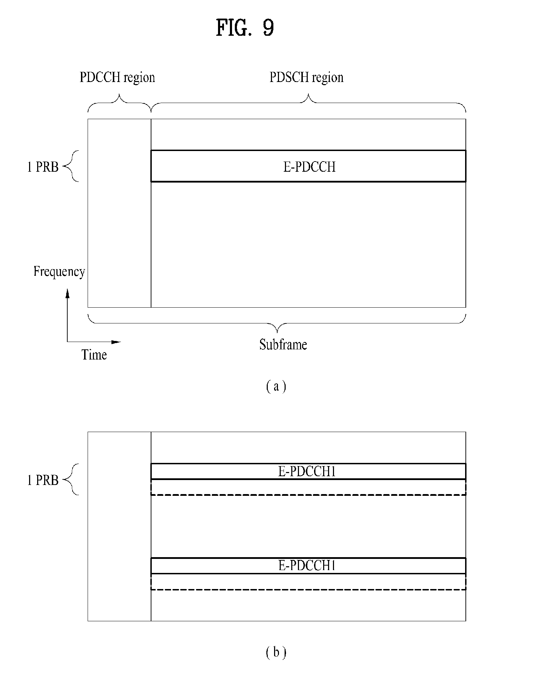

FIG. 9 is a view explaining the concept of an aggregation level of an E-PDCCH according to an embodiment of the present invention.

Referring to FIG. 9, if the aggregation level of the E-PDCCH is low (here, the aggregation level of the E-PDCCH may indicate the number of PRBs occupied by a single E-PDCCH), a frequency diversity gain may not be sufficiently obtained. For instance, if the aggregation level is 1 as illustrated in FIG. 9(a), the E-PDCCH is transmitted only in one PRB consisting of 12 consecutive subcarriers. Therefore, if the PRB enters an instantaneously poor channel state, an overall control channel is difficult to receive.

To solve this problem, in the present invention, the E-PDCCH is transmitted using only partial resources in a single PRB and using partial resources of a PRB which is sufficiently distant from the single PRB, as illustrated in FIG. 9(b). As a result, a frequency diversity gain can be obtained even though the E-PDCCH is transmitted using the same amount of resources illustrated in FIG. 9(a). Furthermore, a part occupied by the E-PDCCH in one PRB may be variously defined. For example, unlike FIG. 9(b), odd-numbered subcarriers or even-numbered subcarriers of one PRB may be defined for use for one E-PDCCH.

Meanwhile, according to an embodiment of the present invention, the E-PDCCH may be transmitted in a manner that REs belonging to one PRB are divided into a plurality of subsets (which may be referred to as enhanced REGs (E-REGs)) and one of the subsets is configured as a basic unit for E-PDCCH resource allocation. In more detail, enhanced CCEs (E-CCEs) are allocated with respect to one or more subsets (or one or more E-REGs) and the E-CCEs are aggregated as many times as an aggregation level so that the E-PDCCH may be transmitted. For example, E-PDCCHs with aggregation levels 1, 2, 4, and 8 are transmitted using 1, 2, 4, and 8 E-CCEs, respectively.

According to the embodiment of the present invention, it is desirable that E-PDCCHs be allocated to REs except for REs assigned for a cell-specific RS (CRS), a demodulation RS (DM-RS), or a CSI-RS in one PRB and for a signal transmission region (PDCCH).

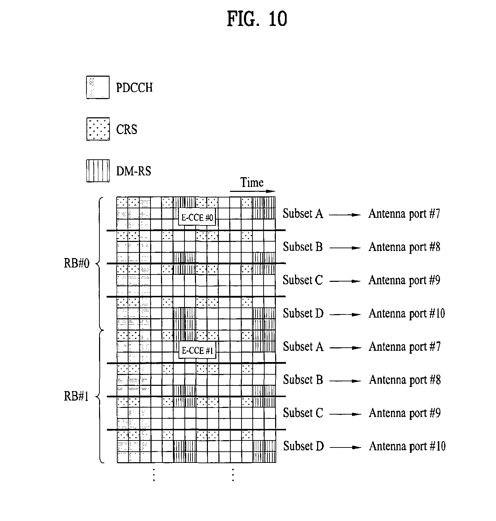

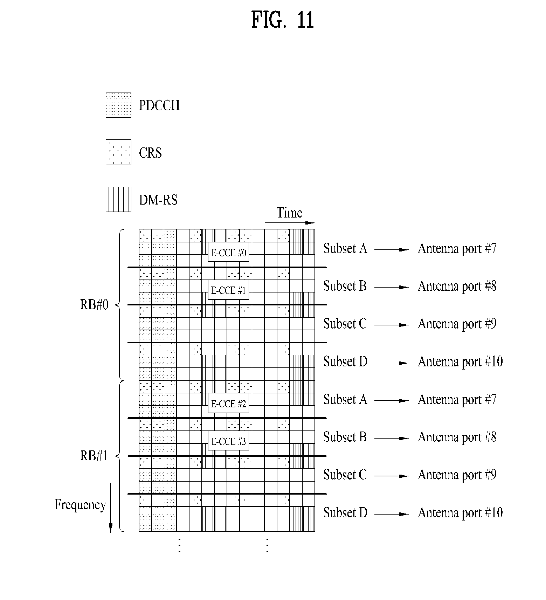

FIGs. 10 and 11 are views explaining assumption of selecting one or more subsets to configure a search space at a UE according to an embodiment of the present invention. While a detailed operation of the present invention will be described hereinbelow under the assumption that REs in one RB are classified into four subsets (referred to as subset A, subset B, subset C, and subset D) as illustrated in FIG. 10, it is apparent that proposal of the present invention is applicable to the case in which REs of one RB are classified into at least one subset. In addition, in the drawings of the present invention, the positions of REs occupied by a CRS or a DM-RS are purely exemplary and the number and positions thereof can vary according to subframe configuration of an eNB or a PDSCH transmission rank.

For example, a UE may select only subset A or select subset A and subset B, from among a total of four subsets (hereinafter, referred to as subset A, subset B, subset C, and subset D) in one RB, thereby configuring a search space.

In FIGs. 10 and 11, each RB (e.g. a virtual resource blocks (VRB), a PRB or a PRB pair) is divided into a plurality of subsets. Especially, it is assumed that each RB is divided into a plurality of subsets based on a UE-specific RS defined as an antenna port.

In FIG. 10, a single RB is divided into four subsets corresponding to four antenna ports (#7, #8, #9, and #10). In an example of FIG. 10, it is assumed that subset A corresponding to antenna port #7 is selected as a subset for the UE. In this case, a set of subset A in each of RB #0, RB #1, RB #2, and RB #3 is configured as a search space for blind decoding.

E-PDCCH transmission shown in FIG. 10 is effective in obtaining a diversity gain in the frequency domain at a low aggregation level, whereas E-PDCCH transmission affects a plurality of RBs. Therefore, it may be desirable not to use E-PDCCH transmission for other purposes. In the present invention, a subset-based E-PDCCH transmission is desirably restricted to special cases. In other words, the present invention may be restricted such that, at a low aggregation level, one subset is selected from subsets in each PRB to obtain a frequency diversity, whereas, at a high aggregation level, plural subsets are selected in each PRB to prevent excessive increase in the number of PRBs in which a corresponding E-PDCCH is transmitted.

Unlike FIG. 10, FIG. 11 illustrates selection of plural subsets in each RB in order to configure a search space specialized for beamforming. REs in an individual RB are classified into regions to correspond to antenna ports #7, #8, #9, and #10 for a plurality of UEs and the classified regions may be referred to as subset A, subset B, subset C, and subset D. In this case, subset A and subset B of an individual block corresponding to antenna ports #7 and #8 may be configured as a search space for blind decoding.

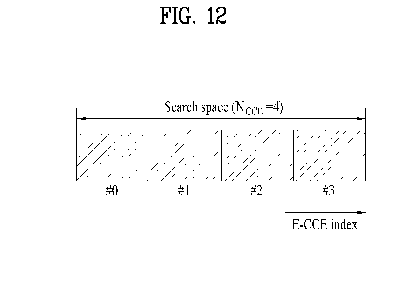

FIG. 12 is a view referred to for performing blind decoding of a search space configured by a UE based on an aggregation level according to an embodiment of the present invention. According to an embodiment of the present invention, a search space is configured with at least one subset allocated to at least one RB.

Namely, the UE configures a search space by selecting subsets therefor in one or more RBs and performs blind decoding according to an aggregation level. A search space for E-PDCCHs with an aggregation level 1, 2, 4, or 8 is configured by obtaining 1, 2, 4, or 8 E-CCEs, respectively.

For example, in the case of FIG. 10, each RB is divided into a total of four subsets and an E-CCE for a UE is allocated with respect to subset A of each RB. It is assumed that a UE-specific RS (DM-RS) to be used to decode the divided subsets is predefined.

The UE configures a set of subsets A divided in individual blocks as a search space by using the predefined UE-specific RSs (DM-RSs) to perform blind decoding. Namely, the UE may obtain a total of four CCEs allocated with respect to subsets A of individual RBs and perform blind decoding a total of 7 times, i.e. four times (E-CCEs #0, #1, #2, and #3) for aggregation level 1, twice {(E-CCEs #0 and #1) and (E-CCEs #2 and #3)} for aggregation level 2, and once {(E-CCEs #0, #1, #2, and #3)} for aggregation level 4, based on a search space consisting of a total of four E-CCEs as illustrated in FIG. 12.

As another example, it is assumed that a search space is configured with a plurality of subsets in each RB as illustrated in FIG. 11. The UE acquires E-CCEs from subset A and subset B in each RB and obtains $2*N$ E-CCEs with respect to $N$ given RBs. If two E-CCEs are included in each RB, aggregation levels may be 1, 2, and 4 and a search space for an E-PDCCH is configured by obtaining 2, 4, and 8 E-CCEs, respectively.

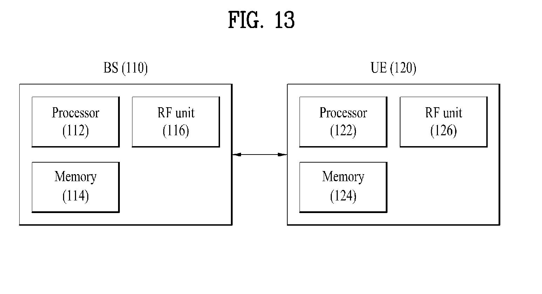

Namely, according to FIG. 11, each RB is divided into a total of four subsets and E-CCEs for a UE are allocated with respect to subset A and subset B of each RB. It is assumed that a UE-specific RS (DM-RS) to be used to decode the divided subsets is predefined. In the case of FIG. 11, the UE performs blind decoding for a set of subsets consisting of subset A and subset B using the predefined UE-specific RS (DM-RS). Namely, the UE may obtain a total of four CCEs allocated to subset A and subset B of each of RB #0 and RB #1 and perform blind decoding a total of 7 times, i.e. four times (E-CCEs #0, #1, #2, and #3) for aggregation level 1, twice {(E-CCEs #0 and #1) and (E-CCEs #2 and #3)} for aggregation level 2, and once {(E-CCEs #0, #1, #2, and #3)} for aggregation level 4, based on a search space consisting of a total of four E-CCEs as illustrated in FIG. 13.

FIG. 13 illustrates a BS and a UE that are applicable to an embodiment of the present invention. If a wireless communication system includes a relay, communication in a backhaul link is performed between the BS and the relay and communication in an access link is performed between the relay and the UE. Accordingly, the BS or the UE shown in FIG. 13 may be replaced with the relay according to situation.

Referring to FIG. 13, the wireless communication system includes a BS 110 and a UE 120. The BS 110 includes a processor 112, a memory 114, and a Radio Frequency (RF) unit 116. The processor 112 may be configured to implement procedures and/or methods proposed in the present invention. The memory 114 is connected to the processor 112 and stores a variety of information related to operation of the processor 112. The RF unit 116 is connected to the processor 112 and transmits and/or receives a radio signal. The UE 120 includes a processor 122, a memory 124, and an RF unit 126. The processor 122 may be configured to implement procedures and/or methods proposed in the present invention. The memory 124 is connected to the processor 122 and stores a variety of information related to operation of the processor 122. The RF unit 126 is connected to the processor 122 and transmits and/or receives a radio signal. The BS 110 and/or the UE 120 may include a single antenna or multiple antennas.

The above-described embodiments are combinations of elements and features of the present invention in a predetermined manner. Each of the elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in another embodiment and may be replaced with corresponding constructions of another embodiment. In the appended claims, it will be apparent that claims that are not explicitly dependent upon each other can be combined to provide an embodiment or new claims can be added through amendment after the application is filed.

The embodiments according to the present invention can be implemented by various means, for example, hardware, firmware, software, or combinations thereof. In the case of a hardware configuration, an embodiment of the present invention may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In the case of a firmware or software configuration, an embodiment of the present invention may be implemented in the form of a module, a procedure, or a function, which performs functions or operations described above. Software code may be stored in a memory unit and then may be executed by a processor. The memory unit may be located inside or outside the processor to transmit and receive data to and from the processor through various well-known means.

The present invention may be carried out in other specific ways than those set forth herein without departing from the spirit and essential characteristics of the present invention. The above detailed description is therefore to be construed in all aspects as illustrative and not restrictive. The scope of the invention should be determined by the appended claims and their legal equivalents and all changes coming within the meaning and equivalency range of the appended claims are intended to be embraced therein.

[Industrial Applicability]

While the above-described method for transmitting a DL control channel at a BS in a wireless communication system and the apparatus therefor have been described focusing upon an example applied to a 3GPP LTE system, the method and apparatus may be applied to various wireless communication systems as well as the 3GPP LTE system.

**Claims**

1. A method for receiving a downlink control channel at a user equipment in a wireless communication system, comprising:

   dividing each of at least one resource block allocated to the user equipment into a preset number of subsets;
   selecting one or more subsets for the user equipment in each of the at least one resource block;
   configuring a set of the selected subsets as a search space for the user equipment; and
   detecting the downlink control channel by performing blind decoding upon the search space,
   wherein each of the preset number of subsets is demodulated by a demodulation reference signal defined by different antenna ports in each resource block.

2. The method according to claim 1, wherein the set of the selected subsets includes subsets demodulated by a demodulation reference signal defined by the same antenna port.

3. The method according to claim 1, wherein the set of the selected subsets includes subsets demodulated by a demodulation reference signal defined by a plurality of different antenna ports for the user equipment.

4. The method according to claim 1, wherein an aggregation level of the downlink control channel is 1 or 2.

5. A user equipment for receiving a downlink control channel in a wireless communication system, comprising:

   a radio frequency (RF) unit; and
   a processor,
   wherein the processor divides each of at least one resource block allocated to the user equipment into a preset number of subsets, selects one or more subsets for the user equipment in each of the at least one resource block, configures a set of the selected subsets

   as a search space for the user equipment, and detects the downlink control channel by performing blind decoding upon the search space, and
   wherein each of the preset number of subsets is demodulated by a demodulation reference signal defined by different antenna ports in each resource block.

6. The user equipment according to claim 5, wherein the set of the selected subsets includes subsets demodulated by a demodulation reference signal defined by the same antenna port.

7. The user equipment according to claim 5, wherein the set of the selected subsets includes subsets demodulated by a demodulation reference signal defined by a plurality of different antenna ports for the user equipment.

8. The user equipment according to claim 5, wherein an aggregation level of the downlink control channel is 1 or 2.

**Amended claims in accordance with Rule 137(2) EPC for the following Contracting State(s):**

**1.** (new) A method for transmitting a downlink control channel at a base station in a wireless communication system, comprising:

configuring a plurality of enhanced control channel elements (ECCEs) associated with different antenna ports in at least one resource block; and
transmitting the downlink control channel using one or more ECCEs corresponding to the same antenna port, among the plural ECCEs.

**2.** (new) The method according to claim 1, wherein the same antenna port is one of four preset antenna ports.

**3.** (new) The method according to claim 1, wherein the antenna ports are configured for association with a demodulation reference signal (DM-RS).

**4.** (new) The method according to claim 1, wherein the number of the plural ECCEs is determined by an aggregation level.

**5.** (new) A method for receiving a downlink control channel at a base station in a wireless communication system, comprising:

configuring at least one resource block for the downlink control channel; and
receiving the downlink control channel by monitoring at least one resource block based on one or more enhanced control channel elements (ECCEs),
wherein the one or more ECCEs are associated with a single antenna port.

**6.** (new) The method according to claim 5, wherein the single antenna port is one of four preset antenna ports.

**7.** (new) The method according to claim 5, wherein the antenna ports are configured for association with a demodulation reference signal (DM-RS).

**8.** (new) The method according to claim 5, wherein the number of the plural ECCEs is determined by an aggregation level.

**Statement under Art. 19.1 PCT**

This replacement sheet includes new claims Claim 1 to Claim 8 for replacing all of the existing claims Claim 1 to Claim 10.

Claim 1 relates to a downlink control channel transmission method and explains a technical feature in which a plurality of enhanced control channel elements (ECCEs) associated with different antenna ports is configured in a resource block and a control channel is transmitted using one or more ECCEs corresponding to a specific antenna port among the configured ECCEs. This is based on FIGs. 10 and 11 and pages 31 to 34 of the specification.

Claim 2 explains a technical feature selected from among four preset antenna ports and is supported by FIG. 10 and FIG. 11.

Claim 3 indicates that antenna ports are associated with a DM-RS and is supported by FIGs. 10 and 11 and page 31.

Claim 4 indicates that the number of plural ECCEs is determined by an aggregation level and is supported by pages 29 and 30.

Claim 5 relates a downlink control channel reception method corresponding to Claim 1 and explains a technical feature in which the downlink control channel is received by monitoring a resource block including ECCEs associated with a specific single antenna port. This is supported by pages 31 to 35 and FIGs. 10 and 11 of the specification.

Claim 6 to Claim 8 include technical features corresponding to Claim 2 to Claim 4, respectively. Claim 6 is supported by FIGs. 10 and 11, Claim 7 is supported by page 31 and FIGs. 10 and 11, and Claim 8 is supported by pages 29 and 30.

# FIG. 1

E-UMTS

# FIG. 2

120

110

| UE | eNB | MME |
|---|---|---|
| NAS | | NAS |
| RRC | RRC | |
| PDCP | PDCP | |
| RLC | RLC | |
| MAC | MAC | |
| PHY | PHY | |

(a) Control-plane protocol stack

120

110

| UE | eNB | SAE Gateway |
|---|---|---|
| PDCP | PDCP | |
| RLC | RLC | |
| MAC | MAC | |
| PHY | PHY | |

(b) User-plane protocol stack

# FIG. 3

Initial cell search | System information reception | Random access procedure | General DL/UL Tx/Rx S308

| P/S - SCH & [DLRS] & PBCH | PDCCH/ PDSCH (BCCH) | PRACH | PDCCH/ PDSCH | PUSCH | PDCCH/ PDSCH | PDCCH/ PDSCH | PUSCH/ PUCCH |

S301   S302   S303   S304   S305   S306   S307

• DL/UL ACK/NACK
• UE CQI/PMI/RI report using PUSCH and PUCCH

FIG. 4

# FIG. 5

# FIG. 6

(a) 1TX or 2TX

(b) 4 TX

# FIG. 7

Antenna
Node

BS

FIG. 8

# FIG. 9

PDCCH region        PDSCH region

1 PRB

E-PDCCH

Frequency

Time      Subframe

( a )

1 PRB

E-PDCCH1

E-PDCCH1

( b )

# FIG. 10

# FIG. 11

FIG. 12

Search space ($N_{CCE}$ =4)

| #0 | #1 | #2 | #3 |

E-CCE index

# FIG. 13

BS (110)                                    UE (120)

| Processor (112) | RF unit (116) |

| Memory (114) |

| Processor (122) | RF unit (126) |

| Memory (124) |

## INTERNATIONAL SEARCH REPORT

International application No.

**PCT/KR2012/006772**

### A. CLASSIFICATION OF SUBJECT MATTER

***H04L 27/26(2006.01)i***

According to International Patent Classification (IPC) or to both national classification and IPC

### B. FIELDS SEARCHED

Minimum documentation searched (classification system followed by classification symbols)
H04L 27/26; H04W 88/02; H04B 7/26; H04W 24/02; H04W 24/00; H04W 88/08

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: wireless, communication, downlink, control channel, terminal, resource block, subset, search, blind decoding, specific terminal reference signal, demodulation, antenna port

### C. DOCUMENTS CONSIDERED TO BE RELEVANT

| Category* | Citation of document, with indication, where appropriate, of the relevant passages | Relevant to claim No. |
|---|---|---|
| A | KR 10-2009-0126203 A (INNOVATIVE SONIC LIMITED) 08 December 2009<br>See claims 1,4,6,7,10,12. | 1-8 |
| A | KR 10-2009-0033001 A (LG ELECTRONICS INC.) 01 April 2009<br>See claims 1,11, paragraphs <95>-<99> and figure 17. | 1-8 |
| A | KR 10-2010-0118067 A (LG ELECTRONICS INC.) 04 November 2010<br>See claims 1,10. | 1-8 |
| A | WO 2011-037439 A2 (SAMSUNG ELECTRONICS CO., LTD.) 31 March 2011<br>See claims 1,2,7,11. | 1-8 |

☐ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 FEBRUARY 2013 (18.02.2013) | **19 FEBRUARY 2013 (19.02.2013)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2012/006772**

| Patent document cited in search report | Publication date | Patent family member | Publication date |
|---|---|---|---|
| KR 10-2009-0126203 A | 08.12.2009 | CN 101600206 A | 09.12.2009 |
| | | CN 101600206 B | 15.06.2011 |
| | | JP 04960408 B2 | 30.03.2012 |
| | | JP 2009-296589 A | 17.12.2009 |
| | | US 2009-0298493 A1 | 03.12.2009 |
| | | US 8326292 B2 | 04.12.2012 |
| KR 10-2009-0033001 A | 01.04.2009 | CN 101809897 A | 18.08.2010 |
| | | CN 101809898 A | 18.08.2010 |
| | | EP 2193615 A2 | 09.06.2010 |
| | | EP 2193615 B1 | 19.09.2012 |
| | | EP 2193616 A1 | 09.06.2010 |
| | | JP 05048839 B2 | 27.07.2012 |
| | | JP 05048841 B2 | 27.07.2012 |
| | | JP 2010-539847 A | 16.12.2010 |
| | | JP 2010-541367 A | 24.12.2010 |
| | | KR 10-2009-0033126 A | 01.04.2009 |
| | | US 2009-0088148 A1 | 02.04.2009 |
| | | US 2011-0083066 A1 | 07.04.2011 |
| | | WO 2009-041779 A1 | 02.04.2009 |
| | | WO 2009-041785 A2 | 02.04.2009 |
| | | WO 2009-041785 A3 | 02.04.2009 |
| KR 10-2010-0118067 A | 04.11.2010 | AU 2010-239911 A1 | 28.10.2010 |
| | | CN 102405610 A | 04.04.2012 |
| | | CN 102439871 A | 02.05.2012 |
| | | CN 102450079 A | 09.05.2012 |
| | | CN 102461248 A | 16.05.2012 |
| | | CN 102461315 A | 16.05.2012 |
| | | EP 2244409 A2 | 27.10.2010 |
| | | EP 2244410 A2 | 27.10.2010 |
| | | EP 2244411 A2 | 27.10.2010 |
| | | EP 2244412 A2 | 27.10.2010 |
| | | EP 2420014 A2 | 22.02.2012 |
| | | EP 2422471 A2 | 29.02.2012 |
| | | EP 2442470 A2 | 18.04.2012 |
| | | EP 2442618 A2 | 18.04.2012 |
| | | EP 2448157 A2 | 02.05.2012 |
| | | GB 2481568 A | 28.12.2011 |
| | | JP 2012-523742 A | 04.10.2012 |
| | | KR 10-0968037 B1 | 07.07.2010 |
| | | KR 10-1098592 B1 | 23.12.2011 |
| | | KR 10-1227528 B1 | 31.01.2013 |
| | | KR 10-2010-0113458 A | 21.10.2010 |
| | | KR 10-2010-0116115 A | 29.10.2010 |
| | | KR 10-2010-0116117 A | 29.10.2010 |
| | | KR 10-2010-0116118 A | 29.10.2010 |
| | | KR 10-2010-0116120 A | 29.10.2010 |
| | | KR 10-2010-0116121 A | 29.10.2010 |

Form PCT/ISA/210 (patent family annex) (July 2009)

INTERNATIONAL SEARCH REPORT
Information on patent family members

International application No.

**PCT/KR2012/006772**

| Patent document cited in search report | Publication date | Patent family member | Publication date |
|---|---|---|---|
| | | KR 10-2010-0116125 A | 29.10.2010 |
| | | KR 10-2010-0116126 A | 29.10.2010 |
| | | KR 10-2010-0116127 A | 29.10.2010 |
| | | KR 10-2010-0116128 A | 29.10.2010 |
| | | KR 10-2010-0116132 A | 29.10.2010 |
| | | KR 10-2010-0117517 A | 03.11.2010 |
| | | KR 10-2010-0129690 A | 09.12.2010 |
| | | KR 10-2010-0129691 A | 09.12.2010 |
| | | KR 10-2010-0131928 A | 16.12.2010 |
| | | KR 10-2010-0133895 A | 22.12.2010 |
| | | KR 10-2011-0118151 A | 28.10.2011 |
| | | KR 10-2011-0118703 A | 31.10.2011 |
| | | KR 10-2012-0019440 A | 06.03.2012 |
| | | KR 10-2012-0034159 A | 10.04.2012 |
| | | KR 10-2012-0111926 A | 11.10.2012 |
| | | US 2010-0261468 A1 | 14.10.2010 |
| | | US 2010-0265847 A1 | 21.10.2010 |
| | | US 2010-0265873 A1 | 21.10.2010 |
| | | US 2010-0265905 A1 | 21.10.2010 |
| | | US 2010-0272001 A1 | 28.10.2010 |
| | | US 2010-0273416 A1 | 28.10.2010 |
| | | US 2010-0304774 A1 | 02.12.2010 |
| | | US 2010-0309837 A1 | 09.12.2010 |
| | | US 2010-0315948 A1 | 16.12.2010 |
| | | US 2011-0317552 A1 | 29.12.2011 |
| | | US 2011-0317628 A1 | 29.12.2011 |
| | | US 2012-0014281 A1 | 19.01.2012 |
| | | US 2012-0020247 A1 | 26.01.2012 |
| | | US 2012-0033606 A1 | 09.02.2012 |
| | | US 2012-0039243 A1 | 16.02.2012 |
| | | US 2012-0057490 A1 | 08.03.2012 |
| | | US 8270361 B2 | 18.09.2012 |
| | | US 8358594 B2 | 22.01.2013 |
| | | US 8374117 B2 | 12.02.2013 |
| | | WO 2010-120084 A2 | 21.10.2010 |
| | | WO 2010-120084 A3 | 21.10.2010 |
| | | WO 2010-120085 A2 | 21.10.2010 |
| | | WO 2010-120085 A3 | 21.10.2010 |
| | | WO 2010-123220 A2 | 28.10.2010 |
| | | WO 2010-123220 A3 | 28.10.2010 |
| | | WO 2010-123224 A2 | 28.10.2010 |
| | | WO 2010-123224 A3 | 28.10.2010 |
| | | WO 2010-123228 A2 | 28.10.2010 |
| | | WO 2010-123228 A3 | 28.10.2010 |
| | | WO 2010-123230 A2 | 28.10.2010 |
| | | WO 2010-123230 A3 | 28.10.2010 |
| | | WO 2010-123252 A2 | 28.10.2010 |
| | | WO 2010-123252 A3 | 28.10.2010 |
| | | WO 2010-123252 A9 | 28.10.2010 |
| | | WO 2010-123253 A2 | 28.10.2010 |

Form PCT/ISA/210 (patent family annex) (July 2009)

<table>
<tr><th colspan="2">INTERNATIONAL SEARCH REPORT<br>Information on patent family members</th><th>International application No.<br>**PCT/KR2012/006772**</th></tr>
</table>

| Patent document cited in search report | Publication date | Patent family member | Publication date |
|---|---|---|---|
| | | WO 2010-123253 A3 | 28.10.2010 |
| | | WO 2010-123254 A2 | 28.10.2010 |
| | | WO 2010-123254 A3 | 28.10.2010 |
| | | WO 2010-123256 A2 | 28.10.2010 |
| | | WO 2010-123256 A3 | 28.10.2010 |
| | | WO 2010-123259 A2 | 28.10.2010 |
| | | WO 2010-123259 A3 | 28.10.2010 |
| | | WO 2010-123279 A2 | 28.10.2010 |
| | | WO 2010-123279 A3 | 28.10.2010 |
| | | WO 2010-123322 A2 | 28.10.2010 |
| | | WO 2010-123322 A3 | 28.10.2010 |
| | | WO 2010-126256 A2 | 04.11.2010 |
| | | WO 2010-126256 A3 | 04.11.2010 |
| | | WO 2010-126257 A2 | 04.11.2010 |
| | | WO 2010-126257 A3 | 04.11.2010 |
| | | WO 2010-126273 A2 | 04.11.2010 |
| | | WO 2010-126273 A3 | 04.11.2010 |
| | | WO 2010-140797 A2 | 09.12.2010 |
| | | WO 2010-140797 A3 | 09.12.2010 |
| | | WO 2010-140798 A2 | 09.12.2010 |
| | | WO 2010-140798 A3 | 09.12.2010 |
| | | WO 2010-143846 A2 | 16.12.2010 |
| | | WO 2010-143846 A3 | 16.12.2010 |
| | | WO 2010-143847 A2 | 16.12.2010 |
| | | WO 2010-143847 A3 | 16.12.2010 |
| | | WO 2010-143850 A2 | 16.12.2010 |
| | | WO 2010-143850 A3 | 16.12.2010 |
| | | WO 2010-143851 A2 | 16.12.2010 |
| | | WO 2010-143851 A3 | 16.12.2010 |
| | | WO 2010-143900 A2 | 16.12.2010 |
| | | WO 2010-143900 A3 | 16.12.2010 |
| | | WO 2010-150998 A2 | 29.12.2010 |
| | | WO 2010-150998 A3 | 29.12.2010 |
| | | WO 2010-151016 A2 | 29.12.2010 |
| | | WO 2010-151016 A3 | 29.12.2010 |
| WO 2011-037439 A2 | 31.03.2011 | AU 2010-298857 A1 | 08.03.2012 |
| | | CA 2771150 A1 | 31.03.2011 |
| | | CN 102549944 A | 04.07.2012 |
| | | EP 2302830 A2 | 30.03.2011 |
| | | KR 10-2012-0085273 A | 31.07.2012 |
| | | US 2011-0075624 A1 | 31.03.2011 |
| | | WO 2011-037439 A3 | 31.03.2011 |